(19) Europäisches Patentamt
European Patent Office
Office européen des brevets

(11) Veröffentlichungsnummer : **0 190 631 B2**

# (12) NEUE EUROPÄISCHE PATENTSCHRIFT

(45) Veröffentlichungstag der neuen Patentschrift : **27.11.91 Patentblatt 91/48**

(51) Int. Cl.$^5$ : **C08F 4/42**, C08F 20/00

(21) Anmeldenummer : **86101031.2**

(22) Anmeldetag : **25.01.86**

## (54) Verfahren zur quasi-ionischen Polymerisation von Acrylsäurederivaten.

(30) Priorität : **07.02.85 DE 3504168**

(43) Veröffentlichungstag der Anmeldung : **13.08.86 Patentblatt 86/33**

(45) Bekanntmachung des Hinweises auf die Patenterteilung : **08.06.88 Patentblatt 88/23**

(45) Bekanntmachung des Hinweises auf die Entscheidung über den Einspruch : **27.11.91 Patentblatt 91/48**

(84) Benannte Vertragsstaaten : **CH DE FR GB IT LI NL SE**

(56) Entgegenhaltungen :
**EP-A- 0 145 263**
**FR-A- 2 094 611**
**ZW-A-175/84**

(73) Patentinhaber : **BAYER AG**
**W-5090 Leverkusen 1 Bayerwerk (DE)**

(72) Erfinder : **Reetz, Manfred T., Prof.Dr.**
**Wiesentalweg 14**
**W-3550 Marburg (DE)**
Erfinder : **Ostarek, Ralph**
**Auf dem Sand 8**
**W-3557 Ebsdorfergrund 3 (DE)**
Erfinder : **Piejko, Karl-Erwin, Dr.**
**Roggendorfstrasse 57**
**W-5000 Köln 80 (DE)**

EP 0 190 631 B2

## Beschreibung

Die Erfindung betrifft ein neues Verfahren zur quasi-ionischen Polymerisation von Acrylsäurederivaten.

Verfahren zur ionischen oder quasi-ionischen Polymerisation von polaren Monomeren mit einer in α-Stellung zur polaren Gruppe befindlichen Doppelbindung sind bekannt (siehe z. B. die US-Patentschrifen 4 351 924, 4 414 372 und 4 417 034). Gemäß diesen bekannten Verfahren werden die ionische Polymerisation mit Hilfe von Initiatoren und die quasi-ionischen Polymerisationen mit Hilfe von Initiatoren in Gegenwart von nucleophilen oder elektrophilen Katalysatoren in Gang gesetzt. In der US-Patentschrif 4 351 924 ist ein Verfahren zur Herstellung von α- und α-,ω-Hydroxyhydrocarbyl-Gruppen aufweisenden Polyalkylmethacrylaten durch ionische Polymerisation von Alkylmethacrylaten unter Verwendung bestimmter Organo-alkali-verbindungen als Initiatoren beschrieben. Das Verfahren hat den schwerwiegenden Nachteil, daß es zur Erzielung der gewünschten engen Molmassenverteilung Polymerisations-Temperaturen von -70° C und tiefer erfordert und daß die gewünschte enge Molmassenverteilung auch nur mit Methacrylaten erreicht wird.

In den US-Patentschrifen 4 414 372 und 4 417 034 ist ein der ionischen Polymerisation verwandtes (quasi-ionisches) Verfahren zur Polymerisation polare Gruppen aufweisender Monomere beschrieben. Als Initiatoren werden in diesem Verfahren Silicium-, Zinn- und Germanium-Verbindungen verwendet, in denen die genannten Elemente an O- oder C-Atome gebunden sind, z. B. Trimethylsilylcyanid oder Trimethylsilylketenacetale. Das Verfahren hat jedoch den Nachteil, daß mit ihm bei Verwendung von Acrylaten als Monomere bei Raumtemperatur entweder nur lebende Polymerisate mit breiter Molmassenverteilung (bei Verwendung nucleophiler Katalysatoren, z. B. Bifluoridionen) oder aber überhaupt keine lebenden Polymerisate (bei Verwendung elektrophiler Katalysatoren, wie Zinkiodid) erhalten werden (siehe Macromolecules 1984, Vol. 17, No. 7, S. 1415-1417).

Überraschenderweise wurde nun gefunden, daß man bei der quasi-ionischen Polymerisation von Acrylsäurederivaten als polare Monomere mit einer in α-Stellung zur polaren Gruppe befindlichen Doppelbindung lebende Polymerisate mit der gewünschten engen Molmassenverteilung auch bei Anwendung von Polymerisationstemperaturen > 0°C erhält, wenn man als Initiatoren spezielle Mercaptosilane verwendet und in Gegenwart nucleophiler oder elektrophiler Katalysatoren polymerisiert.

Die Erfindung betrifft daher ein Verfahren zur quasi-ionischen Polymerisation von Acrylsäurederivaten, bei dem die Polymerisation unter Verwendung von Organo-Siliziumverbindungen als Initiatoren in Gegenwart von nucleophilen oder elektrophilen Katalysatoren ausgelöst und die Polymerisation gegebenenfalls in einem aprotischen Lösungsmittel durchgeführt wird; das Verfahren ist dadurch gekennzeichnet, daß man als Initiatoten Mercaptosilane verwendet der Formel

$$(R)_3Si\text{-}SR^1 \qquad (I)$$

verwendet, in der

R für den Rest eines gegebenenfalls substituierten aliphatischen, cycloaliphatischen araliphatischen oder aromatischen Kohlenwasserstoffs und

$R^1$ für einen $Si(R)_3$-Rest oder einen ein- oder mehrfach durch Trialkylsiloxy- und/oder Trialkylsilylmercapto-Gruppen substituierten $C_1$-$C_{10}$-Alkylrest steht, und die Polymerisation im Temperaturbereich >0°C bis 100°C vomimmt.

Vorzugsweise steht $R^1$ für einen ein- oder mehrfach durch Trialkylsilylmercapto-gruppen substituierten $C_1$-$C_{10}$-Alkylrest.

Als bevorzugte Vertreter der erfindungsgemäß zu verwendenden Initiatoren seien beispielsweise genannt: 1 - (Trimethylsilylmercapto)-2-(trimethylsilyioxy)-ethan, Bis-(trimethylsilyl)-sulfid, und besonders 1,2-Bis-(trimethylsilylmercapto)-ethan und 1,4-Bis-(trimethylsilylmercapto)-butan.

Für R seien als Reste gegebenenfalls substituierter aliphatischer, cycloaliphatischer, araliphatischer oder aromatischen Kohlenwasserstoffe beispielsweise genannt: aliphatische Kohlenwasserstoffreste, z. B. der Methyl-, Ethyl-, n-Propyl-, iso-Butyl-, n-Hexyl-, 2-Ethylhexyl-Rest; cycloaliphatische Reste wie der Cyclopentyl-, der Methylcyclopentyl-, der Cyclohexyl-, der Methylcyclohexyl-, der Dimethylcyclohexyl- und der Tertiärbutyl-Cyclohexyl-Rest;

araliphatische Kohlenwasserstoffreste, wie der Benzyl-, α-Methyl-benzyl-, der 2-, 3- oder 4-Methylbenzyl-Rest und der 2-Phenylethylrest;

aromatische Kohlenwasserstoffreste wie der Phenyl-Rest und die Tolyl- und Xylyl-Reste.

Wegen der leichten Zugänglichkeit der Trisalkyl-, insbesondere der Trimethylsilylverbindungen ist R vorzugsweise eine $C_1$-$C_4$-Alkyl-, besonders bevorzugt eine Methylgruppe.

Für $R^1$ seien als ein- oder mehrfach durch Trialkylsiloxy- und/oder Trialkylsilylmercapto-gruppen substituierte $C_1$-$C_{20}$-Alkylreste beispielsweise genannt: der 2-Trimethylsilyloxy-ethyl-, 2-Trimethylsilylmercaptoethyl-, 3-Triethylsilylmercapto-propyl-, 4-Trimethylsilylmercaptobutyl-, der 1,3-Di-(trimethylsilyloxy)-propyl-(2), der 1,3-Di-(trimethylsilylmercaplo)-propyl-(2)-, der 1 -Trimethylsilylmercapto-3-trimethylsilyloxy-propyl-(2)-, der 1 -

Trimethylsilylmercapto-2-trimethylsilyloxy-propyl-(3)- und der 1,2-Di-(trimethylsilylmercapto)-propyl-(3)-Rest.

Die erfindungsgemäß als Initiatoren zu verwendenden Mercaptosilane haben gegenüber den in der US-Patentschrif 4 414 372 unter anderem als Initiatoren beschriebenen silylierten Ketenacetalen außer dem bereits früher genannten Vorteil, auch bei Acrylsäurederivaten bei Raumtemperatur lebende Polymerisate mit enger Molmassenverteilung zu liefern, den weiteren Vorteil, daß sie sehr viel leichter zugänglich und deshalb viel billiger sind. Mit den erfindungsgemäß als Initiatoren zu verwendenden Mercaptosilanen lassen sich quasiionische Polymerisatoinen auch in techischem Maßstab durchführen.

Die erfindungsgemäß als Initiatoren zu verwendenden Mercaptosilane sind im Handel erhältlich oder sie können nach bekannten Methoden durch Silylieren der entsprechenden Mercaptane hergestellt werden (siehe z. B. D. A. Evans, J. Am. Chem. Soc. 99,5009 (1977); R. S. Glass, J. organomet. Chem. 61,83 (1973)). Da sich auch geringe Mengen von Verunreinigungen störend auf die Polymerisation auswirken, sollten nur sorgfältig - z. B. durch fraktionierte Destillation - gereinigte Mercaptosilane eingesetzt werden.

Die erfindungsgemäß zu verwendenden Initiatoren werden in einer solchen Menge eingesetzt, daß das Molverhältnis Monomer/Initiator midestens 1 : 1, vorzugsweise 5 : 1 bis 1000 : 1 beträgt.

Die erfindungsgemäß zu verwendenden Initiator werden zusammen mit den für solche quasi-ionischen Polymerisationen polarer Monomer mit einer in $\alpha$-Stellung zur polaren Gruppe befindlichen Doppelbindung üblicherweise verwendeten Katalysatoren angewendet. Diese Katalysatoren sind z. B. in der US-PS-4 414 034 Spalte 6, Zeile 55 - Spalte 7, Zeile 15 beschrieben.

Besonders bewährt haben sich von diesen Katalysatoren Zinkiodid, Di-isobutylaluminiumchlorid, Tris-(dimethylamino)-sulfoniumdifluorotrimethylsilicat (TASF), Tetrabutylammoniumfluorid (TBAF), Tris-(dimethylamino)-sulfoniumbifluorid ($TASHF_2$), Tetraalkyammoniumbifluoride, Kaliumbifluorid und Benzyltrimethylammoniumfluorid und -bifluorid.

Bevorzugt verwendet werden Fluoridionen bildende Katalystoren wie Tris-(dimethylamino)-sulfoniumdifluorotrimethylsilicat (TASF), Tetrabutylammoniumfluorid (TBAF) und Benzyltrimethylammoniumfluorid. Besonders bevorzugt sind Bifluoridionen bildende Katalysatoren wie Tris-(dimethylamino)-sulfoniumbifluorid ($TASHF_2$) Tetraalkylammoniumbifluoride, Kaliumbifluorid und Benzyltrimethylammoniumbifluorid.

Die Herstellung des bevorzugt verwendeten Katalysators TASF ist in der US-Patentschrift 3 940 402, die des entsprechenden Bifluorids ($TASHF_2$) in "Polymer Preprints ACS Washington", 24, 52 (1983) beschrieben.

Das Molverhältnis Initiator/Katalysator liegt zwischen 500 - 1 : 1, vorzugsweise 100 - 1 : 1, besonders bevorzugt bei 10 - 1 : 1.

Das erfindungsgemäße Polymerisationsverfahren kann bei Temperaturen von > 0- + 100°C ausgeführt werden; vorzugsweise wird die Polymerisation bei Temperaturen von 0-+50°C vorgenommen.

Die erfindungsgemäße Polymerisation wird, wie dies für ionische Polymerisationen allgemein üblich ist, in einer Inertgasatmosphäre, z. B. Stickstoff, und unter Ausschluß von Feuchtigkeit vorgenommen.

Das erfindungsgemäße Polymerisationsverfahren wird vorzugsweise in einem aprotischen Lösungsmittel durchgeführt. Geeignete aprotische Lösungmittel sind solche, die die Reaktionskomponenten (Monomere, Initiator, Katalysator) bei der vorgesehen Reaktionstemperatur in ausreichendem Maße lösen; z. B. Methylacetat, Propionitril, Acetonitril, Toluol, Xylol, Methylenchlorid, 1,1,1-Trichlorethan, Brombenzol, Dimethylformamid, N,N-Dimethylacetamid, N-Methylpyrrolidon, Anisol, Tetrahydrofuran und 2-(Butoxy)-ethoxy-trimethylsilan. Die Auswahl des Lösungsmittels richtet sich unter anderem nach der Natur des Katalysators: während für elektrophile Katalysatoren vorzugsweise Kohlenwasserstoffe und chlorierte Kohlenwasserstoffe verwendet werden, werden für nucleophile Katalysatoren vorzugsweise aprotische Lösungsmittel, vorzugsweise Nitrile, wie Acetonitril, oder Ether, wie Tetrahydrofuran, bevorzugt.

Der Monomergehalt der Polymerisationslösungen sollte etwa 1 - 90 Gew.-%, vorzugsweise 5 - 50 Gew.-% betragen.

Das erfindungsgemäße Polymerisationsverfahren wird bevorzugt in folgender Weise ausgeführt:

Mercaptosilan-Initiator und Katalysator werden im vorgesehenen Lösungsmittel vorgelegt. Dieses Gemisch wird langsam unter Rühren mit dem gegebenenfalls mit Lösungsmittel verdünnten Monomer versetzt. Die Zugabe des Monoers kann unmittelbar nach dem Mischen von Initiator und Katalysator oder nach einer gewissen Präformierungszeit erfolgen; die Präformierungszeit kann bis zu mehreren Stunden dauern. Soll die Polymerisation bei konstanter Temperatur vorgenommen werden, so richtet sich die Geschwindigkeit, mit der man das Monomer zugeben kann, nach den Möglichkeiten, die Reaktionswärme abzuführen.

Das erfindungsgemäße Verfahren läßt sich jedoch auch in anderer Weise ausführen, z. B. durch aufeinanderfolgende Zugabe der einzelnen Komponenten oder durch gleichzeitiges Vermischen aller Komponenten. Für die gewünschte enge Molmassenvertielung ist es vorteilhalt, wenn sich die Gesamtmenge des Initiators von Anfang an im Reaktionssystem befindet und während der Polymerisation kein Initiator mehr zudosiert wird.

Nach beendeter Polymerisation liegenim Reaktionsgefäß, falls die Polymerisation nicht durch Zugabe eines Abbruch-Reagenz, wie z. B. Methanol oder Essigsäure, abgebrochen wurde, lebende Polymer vor, d.h.

Polymlere, deren Polymerisationszentren auch nach dem Verbrauch der Monomere noch aktiv bleiben und deshalb mit neuen Monomeren z. B. zu Blockpolymerisaten, oder mit Kopplungsreagenzien, wie Bis chlormethyl-benzol, Bis-brommethyl-benzol, oder Titantetrachlorid/Brom umgesetzt oder mit funktionelle Gruppen aufweisenden Verbindungen, z. B. durch Trialkylsiloxy-Gruppen substituierten Estern, tert-Alkylhalogeniden oder Benzylhalogeniden, funktionalisiert werden können. Diese Reaktionen der lebenden Polymere lassen sich auch nach Verarbeiten der lebenden Polymere, z. B. zu Filmen oder Fasern, durchführen, wenn der Verarbeitungsprozeß unter Bedingungen, unter denen keine Desaktivierung der lebenden Polymere eintritt, vorgenommen wird. Diese Folgereaktionen der lebenden Polymere sind bekannt (siehe z. B. US-PS-4 417 034; M. T. Reetz, Angew. Chem. Int. Ed. Engl. 21, 96 (1982)).

Als Vertreter der in dem erfindungsgemäßen Polymerisationsverfahren einzusetzenden Acrylsäurederivate seien beispielsweise genannt: Acrylsaureester wie Ethylacrylat, Butylacrylat, 2-Ethyl-hexylacrylat, Sorbylacrylat, 2-(Dimethylamino)-ethylacrylat, 3,3-Dimethoxypropylacrylat, 2,2,3,3,4,4,4-Heptafluorobutylacrylat, 2-Cyanethylacrylat, 4-Fluorophenylacrylat, Chlorethylacrylat, 2-(Propenyl-(1)-oxy)-ethyl-acrylat- Phenylacrylat, Allylacrylat, Acrylamide wie N,N-Dimethylacrylamid und Acrylnitril.

Bevorzugt verwendet werden Acrylsäureester wie Sorbylacrylat, Ethylacrylat, Butylacrylat, 2-Ethylhexylacrylat, 2-(Dimethylamino)-ethylacrylat, 3,3-Dimethoxy-propylacrylat, 2,2,3,3,4,4,4-Heptafluorobutylacrylat, 2-Cyanethylacrylat, 4-Fluorophenylacrylat, 2-Chlorethyl-acrylat, 2-(Propenyl-(1)-oxy)-ethyl-acrylat, Phenylacrylat und Allylacrylat.

In den nachfolgenden Beispielen wird zur Kennzeichnung der erfindungsgemiß erhaltenen Polymerisate die Kenngröße D (Polydispersität) verwendet. Die Polydispersität D ist das Verhaltnis aus Massenmittelwert der Molmasse ($M_w$) und Zahlenmittelwert der Molmasse ($M_n$) ($D - M_w/M_n$). Die Molmassenmittelwerte wurden mittels Gelpermeationschromatographie bestimmt unter Verwendung einer universellen Eichbeziehung.

**Beispiel 1**

In einem durch Erwärmen im Vakuum getrockneten, mit Magnetrüher ausgerüsteten 100-ml-Kölbchen werden unter Stickstoff 10 ml Acetonitril, 0,75 ml (2,9 mMol) 1,2-Bis-(trimethyl-silylmercapto)-ethan und 0,2 ml (0,2 mMol) einer 1-molaren Lösung von Tris-(dimethylamino)-sulfoniumbifluorid vorgelegt. Zu dieser Mischung werden unter Rühren innerhalb von 30 Minuten 5 ml (24 mMol) 2-Ethylhexylacrylat getropft. Das Anspringen der Polymerisationsreaktion macht sich an einer Erwärmung der Reaktionsmischung bemerkbar. Die Reaktionstemperatur bleibt während des Zutropfens zwischen 30 und 40°C. Nach beendeter Monomer-Zugabe wird das Polymerisationsgemisch 1 Stunde nachgerührt. Die Polymerisationsreaktion wird durch Zugabe von 1 ml Methanol abgebrochen. Die Polymerisationsmischung wird am Rotationsverdampfer von flüchtigen Bestandteilen befreit.

Es werden 4,7g (= 90 % der Theorie) Poly-(2-ethylhexylacrylat) erhalten $M_n$ = 1,8 kg/Mol; D = 1,24.

**Beispiele 2 - 10**

Die in Tabelle 1 aufgeführten Monomere werden mit den ebenfalls in Tabelle 1 angegebenen Initiator/Katalysator-Kombinationen wie in Beispiel 1 beschrieben umgesetzt. Zinkiodid wurde als Feststoff, die anderen Katalysatoren in Form 1 -molarer Lösung in Acetonitril eingesetzt. Die Ausbeuten, Zahlenmittelwerte der Molmassen ($M_n$) und Polydispersititen (D) der erhaltenen Polymere sind ebenfalls in Tabelle 1 aufgeführt.

Die in Tabelle 1 verwendeten Abkürzungen haben folgende Bedeutung:

Initiatoren

A = $(CH_3)_3Si-S-CH_2-CH_2-S-Si(CH_3)_3$
B = $(CH_3)_3Si-O-CH_2-CH_2-S-Si(CH_3)_3$
C = $(CH_3)_3Si-S-(CH_2)_4-S-Si(CH_3)_3$
D = $(CH_3)_3Si-S-Si(CH_3)_3$

Katalysatoren

$TBAHF_2$: Tetrabutylammoniumbifluorid
> R $TASHF_2$: Tris(dimethylamino)sulfoniumbifluorid
TBAF: Tetrabutylammoniumfluorid

> R BTAF: Benzyltrimethylammoniumfluorid
> R $ZnI_2$: Zinkiodid

Monomere

BA: Butylacrylat
> R EHA: 2-Ethylhexylacrylat
> R EA: Ethylacrylat

Lösungsmittel

THF: Tetrahydrofuran

**Tabelle 1**

| Bsp. | Initiator Verbindung/ Menge [ml]/ [mMol] | Katalysator Verbindung/ Menge [mMol] | Monamer Verbindung/ Menge [ml] [mMol] | Lösungsmittel Verbindung/ Menge [ml] | Ausbeute [g] | $M_n$ [kg/ Mol] | D | Bemerkungen |
|---|---|---|---|---|---|---|---|---|
| 2 | B/0,5/1,9 | $TASHF_2$/0,1 | BA/5/35 | Acetonitril/10 | 4,4 | 1,9 | 1,5 | |
| 3 | B/0,5/1,9 | $TASHF_2$/0,1 | BA/5/35 | THF/10 | 4,1 | 3,4 | 1,5 | Vor Monomerzugabe 1 h gerührt |
| 4 | A/0,75/2,9 | TBAF/0,05 | EHA/5/24 | THF/10 | 4,7 | 2,6 | 1,5 | |
| 5 | A/0,5/1,9 | $TASHF_2$/0,1 | BA/5/35 | THF/10 | 4,9 | 4,6 | 1,3 | |
| 6 | B/1,3/5,0 | BTAF/1,3 | EHA/10/48 | THF/20 | 8,8 | 1,9 | 1,3 | einige Minuten Induktionszeit |
| 7 | D/1,0/4,8 | TBAF/5 | EA/5,4/50 | THF/20 | 5,2 | 0,64 | 1,3 | |
| 8 | B/1,3/5,0 | $Z_nJ_2$/0,4 | EA/5,2/48 | Toluol/20 | 5,8 | 3,9 | 1,2 | einige Minuten Induktionszeit |
| 9 | B/1,3/5,0 | $Z_nJ_2$/3 | EHA/10/48 | Toluol/20 | 9,9 | 5,0 | 1,2 | „ |

## Beispiel 10

Es wird wie in Beispiel 5 beschrieben gearbeitet, nur werden anstelle der 5 ml Butylacrylat nur 3 ml (21 mMol) Butylacrylat zur Initiator/Katalysator-Mischung getropft. Nach Zugabe des Butylacrylates wird das Polymerisationsgemisch 3 Stunden bei Raumtemperatur gerührt. Anschließend werden weitere 3 ml (21 mMol) Butylacrylat zugetropft. Das Anspringen der Polymerisationsreaktion mit der neuen Monomercharge läßt sich am Temperaturanstieg der Polymerisationsmischung erkennen. Es werden 5,8 g (100 % der Theorie) Polybutylacrylat erhalten mit $M_n$ = 4,9 kg/Mol, D = 1,4.

## Patentansprüche

1. Verfahren zur quasi-ionischen Polymerisation von Acrylsäurederivaten bei dem die Polymerisation unter Verwendung von Organo-Silicium-Verbindungen als Initiatoren in Gegenwart von nucleophilen oder elektrophilen Katalysatoren ausgelöst und die Polymerisation gegebenenfalls in Anwesenheit eines aprotischen Lösungsmittels, durchgeführt wird, dadurch gekennezeichnet, daß man als Initiator Mercaptosilane der Formel

$$(R)_3Si\text{-}SR^1 \qquad (I)$$

verwendet, in der
R für den Rest eines gegebenfalls substituierten aliphatischen, cycloaliphatischen, araliphatischen oder aromatischen Kohlenwasserstoffs und
$R^1$ für den $Si(R)_3$-Rest oder einen ein- oder mehrfach durch Trialkylsiloxy- und/oder Trialkylsilylmercapto-Gruppen substituierten $C_1$-$C_{10}$-Alkylrest steht, und die Polymerisation im Temperaturbereich >0°C bis 100°C vornimmt.

2. Verfahren gemäß Anspruch 1, dadurch gekennzeichnet daß als Mercaptosilane Bis-(trimethylsilyl)-sulfid, 1,2-Bis-(trimethylsilylmercapto)-ethan, 1-(Trimethylsilylmercapto)-2-(trimethylsilyloxy)-ethan oder 1,4-Bis-(trimethylsilylmercapto)-butan eingesetzt werden.

3. Verfahren gemäß Anspruch 1, dadurch gekennzeichnet, daß als Mercaptosilane 1,2-Bis-(trimethylsilylmercapto)-ethan oder 1,4-(Trimehtylsilylmercapto)-butan eingesetzt werden.

4. Verfahren nach Anspruch 1, 2 oder 3, dadurch gekennzeichnet, daß als Katalysatoren Zinkiodid, Di-isobutyl-aluminiumchlorid, Tris-(dimethylamino)-sulfoniumdifluorotrimethylsilicat, Tetrautylammoniumfluorid, Tris-(dimethylamino)-sulfoniumfluorid, Tetraalkylammoniumbifluoride, Kaliumbifluorid, Benzyltrimethylammoniumfluorid oder Benzyltrimethylammoniumbifluorid verwendet werden.

5. Verfahren gemäß Anspruch 1, 2 oder 3, dadurch gekennzeichnet, daß als Katalysatoren Fluorid- oder Bifluoridionen bildende Katalysatoren verwendet werden.

6. Verfahren gemäß Anspruch 5 dadurch gekennzeichnet, daß als Katalysatoren Tris-(dimethylamino)-sulfonium-difluorotrimethylsilicat, Tetrabutylammoniumfluorid, Tris-(dimethylamino)-sulfoniumdifluorid, Tetraalkylammomiumbifluoride, Kahliumbifluorid, Benzyltrimethylammoniumfluorid oder Benzyltrimethylammoniumbifluorid verwendet werden.

7. Verfahren gemäß Anspruch 5 dadurch gekennzeichnet, daß als Katalysatoren Bifluoridionen bildende Katalysatoren verwendet werden.

8. Verfahren nach Anspruch 1 -7, dadurch gekennzeichnet, daß als Acrylsäurederivate Acrylsäureester eingesetzt werden.

## Revendications

1. Procédé de polymérisation quasi ionique de dérivés de l'acide acrylique, dans lequel on déclenche la polymérisation en utilisant des composés d'organosilicium comme inducteurs, en opérant en présence de catalyseurs nucléophiles ou électrophiles et l'on effectue la polymérisation éventuellement en présence d'un solvant aprotique, caractérisé en ce qu'on utilise comme inducteurs des mercaptosilanes de formule :

$$(R)_3Si\text{-}SR^1 \qquad (I)$$

dans laquelle :

R représente le reste d'un hydrocarbure aliphatique, cycloaliphatique, araliphatique ou aromatique, éventuellement substitués, et

$R^1$ représente le reste $Si(R)_3$ ou bien un reste alkyle en $C_1$-$C_{10}$, substitué une ou plusieurs fois par des groupes trialkylsiloxy et/ou trialkylsilylmercapto, et on effectue la polymérisation dans l'intervalle de températures de >0°C à +100°C.

2. Procédé selon la revendication 1, caractérisé en ce qu'on utilise comme mercaptosilanes du sulfure de bis-(triméthylsilyle), le 1,2-bis-(triméthylsilylmercapto)-éthane, le 1-(triméthylsilylmercapto)-2-(triméthylsilyloxy)-éthane ou le 1,4-bis-(triméthylsilylmercapto)-butane.

3. Procédé selon la revendication 1, caractérisé en ce qu'on utilise comme mercaptosilanes le 1,2-bis-(triméthylsilylmercapto)-éthane ou le 1,4-(triméthylsilylmercapto)-butane.

4. Procédé selon la revendication 1, 2 au 3, caractérisé en ce qu'on utilise comme catalyseurs l'iodure de zinc, le chlorure de diisobutylaluminium, le difluorotriméthylsilicate de tris-(diméthylamino)-sulfonium, le fluorure de tétrabutylammonium, le fluorure de tris-(diméthylamino)-sulfonium, des bifluorures de tétraalkylammonium, du bifluorure de potassium, du fluorure de benzyltriméthylammonium ou du bifluorure de benzyltriméthylammonium.

5. Procédé selon la revendication 1, 2 ou 3, caractérisé en ce qu'on utilise comme catalyseurs des catalyseurs formant des ions fluorure ou bifluorure.

6. Procédé selon la revendication 5, caractérisé en ce qu'on utilise comme catalyseurs le difluorotriméthylsilicate de tris-(diméthylamino)-sulfonium, le fluorure de tétrabutylammonium, le bifluorure de tris-(diméthylamino)-sulfonium, des bifluorures de tétra-alkylammonium, du bifluorure de potassium, du fluorure de benzyltriméthylammonium ou du bifluorure de benzyltriméthylammonium.

7. Procédé selon la revendication 5, caractérisé en ce qu'on utilise comme catalyseurs des catalyseurs formant des ions bifluorure.

8. Procédé selon l'une quelconque des revendications 1 à 7, caractérisé en ce qu'an utilise comme dérivés de l'acide acrylique des esters de l'acide acrylique.

## Claims

1. Process for the quasi-ionic polymerization of acrylic acid derivatives, in which the polymerization is

initiated using organosilicon compounds as the initiators in the presence of nucleophilic or electrophilic catalysts and the polymerization is carried out if appropriate in the presence of an aprotic solvent, characterized in that the initiators used are mercaptosilanes of the formula

$$(R)_3Si\text{-}SR^1 \qquad (I)$$

in which

R represents the radical of an optionally substituted aliphatic, cycloaliphatic, araliphatic or aromatic hydrocarbon and

$R^1$ represents the $Si(R)_3$ radical or a $C_1$-$C_{10}$-alkyl radical which is monosubstituted or polysubstituted by trialkylsiloxy and/or trialkylsilylmercapto groups, and the polymerization is carried out in the temperature range >0°C to 100°C.

2. Process according to Claim 1, characterized in that the mercaptosilanes employed are bis-(trimethylsilyl) sulphide, 1,2-bis-(trimethylsilylmercapto)-ethane, 1-(trimethylsilylmercapto)-2-(trimethylsiloxy)-ethane or 1,4-bis-(trimethylsilylmercapto)-butane.

3. Process according to Claim 1, characterized in that the mercaptosilanes employed are 1,2-bis-(trimethylsilylmercapto)-ethane or 1,4-(trimethylsilylmercapto)butane.

4. Process according to Claim 1, 2 or 3, characterized in that the catalysts used are zinc iodide, diisobutylaluminium chloride, tris-(dimethylamino)-sulphonium di-fluorotrimethylsilicate, tetrabutylammonium fluoride, tris-(dimethylamino)-sulphonium fluoride, tetraalkylammonium bifluorides, potassium bifluoride, benzyltrimethylammonium fluoride or benzyltrimethylammonium bifluoride.

5. Process according to Claim 1, 2 or 3, characterized in that the catalysts used are catalysts which form fluoride or bifluoride ions.

6. Process according to Claim 5, characterized in that the catalysts used are tris-(dimethylamino)-sulphonium difluorotrimethylsilicate, tetrabutylammonium fluoride, tris-(dimethylamino)-sulphonium difluoride, tetraalkyl-ammonium bifluorides, potassium bifluoride, benzyltrimethyl ammonium fluoride or benzyltrimethylammonium bifluoride.

7. Process according to Claim 5, characterized in that the catalysts used are catalysts which form bifluoride ions.

8. Process according to Claims 1-7, characterized in that the acrylic acid derivatives employed are acrylic acid esters.